# DEMANDE DE BREVET EUROPEEN

(11) **EP 1 550 962 A1**
(43) Date de publication de la demande: **06.07.2005**
(21) Numéro de dépôt: 04291366.5
(22) Date de dépôt: 01.06.2004
(51) Int. Cl.: G06F 17/30

(54) **Système et procédé informatiques de chargement de données**

(71) Demandeur: FRANCE TELECOM, 75015 Paris (FR)
(72) Inventeur: Gruson, Manuel, 75014 Paris (FR); Lechervy, Yves, 91700 Ste Geneviève des Bois (FR)
(74) Mandataire: Remy, Vincent Noel Paul

(57) **Abrégé**

Le système informatique (10) de chargement de données du type comporte des moyens d'accès (30) à un serveur distant (28) stockant des fichiers de données (40, 42), et des moyens de stockage (48) au moins temporaire de fichiers. Il comporte également un premier programme (12, 14, 16, 18) d'ordinateur comprenant : des moyens de téléchargement (20, 22, 26) d'un fichier du serveur, et des moyens d'accès (50, 52, 54, 56) aux moyens de stockage, pour l'écriture du fichier téléchargé (58, 60).

Le système comporte en outre un second programme (12, 14, 16, 18) d'ordinateur différent du premier, comprenant des moyens d'accès (50, 52, 54, 56) aux moyens de stockage (48), pour la lecture du fichier téléchargé (58, 60) par le premier programme d'ordinateur (12, 14, 16, 18). L'invention concerne également le procédé informatique de chargement de données associé.

## Description

La présente invention concerne un système informatique de chargement de données et un procédé correspondant.

Plus précisément, l'invention concerne un système informatique de chargement de données du type comportant :
- des moyens d'accès à un serveur distant stockant des fichiers de données ;
- des moyens de stockage au moins temporaire de fichiers ;
- un premier programme d'ordinateur comprenant :

- des moyens de téléchargement d'un fichier du serveur ; et
- des moyens d'accès aux moyens de stockage, pour l'écriture du fichier téléchargé.

On connaît déjà, dans l'état de la technique, un tel système informatique. Par exemple, il est connu de concevoir un terminal mobile, dans lequel sont installés les programmes suivants :
- un navigateur Internet ; et
- un composeur de MMS.

Le terminal mobile est relié au réseau Internet par l'intermédiaire du réseau d'un opérateur.

De manière classique, le navigateur est conçu pour se connecter à un serveur distant via le réseau Internet et pour télécharger, afin de les afficher, des pages, par exemple des fichiers au format HTML, stockées sur le serveur.

Le navigateur enregistre dans un "cache" une copie des fichiers HTML et tout ou partie des éléments liés à ces fichiers, par exemple des images qu'elles contiennent.

Le cache est par exemple un répertoire de l'arborescence du système de fichiers du terminal mobile.

Le cache permet d'éviter la sollicitation inutile des moyens d'accès du terminal mobile pour le chargement ultérieur de fichiers qui ont déjà été téléchargés.

Ainsi, l'utilisation du cache permet de libérer de la bande passante pour l'opérateur du réseau de télécommunication, et permet d'obtenir un chargement plus rapide des fichiers pour l'utilisateur, les fichiers téléchargés étant stockés localement.

Le composeur de MMS dispose d'un cache qui lui est propre et gère de manière indépendante le téléchargement de fichiers à partir du serveur.

Actuellement, les terminaux mobiles ne comportent pas un grand nombre de programmes destinés à télécharger des fichiers, et les capacités des terminaux mobiles sont suffisantes.

Néanmoins, le souhait des utilisateurs de terminaux mobiles de bénéficier d'un grand nombre de services va entraîner la multiplication de tels programmes, ce qui posera des problèmes de capacité de téléchargement et de stockage des terminaux mobiles.

L'invention a pour but de pallier ces problèmes en proposant un système informatique capable de comporter un grand nombre d'applications susceptibles de télécharger des fichiers à partir d'un serveur distant, sans augmentation de sa capacité de téléchargement et de stockage.

A cet effet, l'invention a pour objet un système informatique du type précité, caractérisé en ce qu'il comporte un second programme d'ordinateur différent du premier comprenant des moyens d'accès aux moyens de stockage, pour la lecture du fichier téléchargé par le premier programme d'ordinateur.

Ainsi, le second programme d'ordinateur profite avantageusement, c'est-à-dire sans avoir lui-même à effectuer le téléchargement, du fichier téléchargé par le premier programme, contenu dans les moyens de stockage, qui peuvent alors être considérés comme un cache mutualisé entre les programmes.

Grâce à l'invention, le second programme sollicite moins les moyens d'accès du terminal mobile pour le téléchargement de fichiers. L'intérêt de l'invention se manifeste d'autant plus que le nombre de programmes utilisant le cache mutualisé est grand.

L'invention permet également la mise à jour de données communes, contenues dans les fichiers téléchargés, utilisées par un grand nombre d'applications.

De plus, l'invention permet aussi à une application ne possédant pas de moyens de téléchargement, la mise à jour des données que celle-ci utilise.

De manière optionnelle, le fichier du serveur étant associé à un identifiant qui lui est propre, le premier programme comporte des moyens d'accès aux moyens de stockage, pour l'écriture de cet identifiant et son rattachement au fichier téléchargé, et le second programme comporte des moyens d'accès aux moyens de stockage, pour la recherche du fichier téléchargé à partir de son identifiant.

Cet identifiant permet de différencier deux fichiers d'origines différentes, qui auraient été confondus entre eux par des méthodes d'identification classiques, par exemple en utilisant le nom du fichier. L'identifiant évite donc la mise à jour, c'est-à-dire le remplacement dans les moyens de stockage, du fichier téléchargé par un autre fichier n'ayant aucun rapport avec le fichier téléchargé.

De manière optionnelle, le premier programme comporte des moyens d'accès aux moyens de stockage, pour l'écriture d'un attribut et son rattachement au fichier téléchargé, l'attribut pouvant prendre une valeur indiquant que le fichier téléchargé ne doit pas être accessible en lecture pour la seconde application.

Ainsi, certains fichiers "sensibles" téléchargés par le premier programme peuvent ne pas être disponibles pour le second programme.

Cela permet notamment au premier programme de disposer de deux caches, un cache mutualisé et un cache propre, ces deux caches étant en fait constitués par les mêmes moyens de stockage, ce qui facilite leur gestion.

L'invention a également pour objet un procédé de chargement de données comportant les étapes suivantes :
- accession à un serveur distant stockant des fichiers de données ;
- téléchargement dans un système informatique d'un fichier du serveur en vue de son utilisation par un premier programme d'ordinateur installé sur ce système ;
- accession par le premier programme à des moyens de stockage au moins temporaire, pour l'écriture du fichier téléchargé ;
caractérisé par une étape d'accession par un second programme d'ordinateur aux moyens de stockage, pour la lecture du fichier téléchargé en vue de son utilisation par le second programme d'ordinateur.

De manière optionnelle, le procédé comporte en outre les étapes suivantes, le fichier du serveur étant associé à un identifiant qui lui est propre :
- accession aux moyens de stockage pour l'écriture de cet identifiant et son rattachement au fichier téléchargé ; et
- accession par le second programme aux moyens de stockage, pour la recherche du fichier téléchargé à partir du même identifiant.

De manière optionnelle, le procédé comporte en outre une étape d'accession aux moyens de stockage, pour l'écriture d'un attribut et son rattachement au fichier téléchargé, l'attribut pouvant prendre au moins une valeur indiquant que le fichier téléchargé ne doit pas être accessible en lecture pour le second programme.

L'invention sera mieux comprise à la lecture de la description qui va suivre, donnée uniquement à titre d'exemple et faite en se référant aux dessins annexés dans lesquels :
- la figure 1 est une vue schématique d'un système informatique de chargement de données selon l'invention ; et
- la figure 2 est un diagramme représentant les étapes d'un procédé de chargement de données selon l'invention.

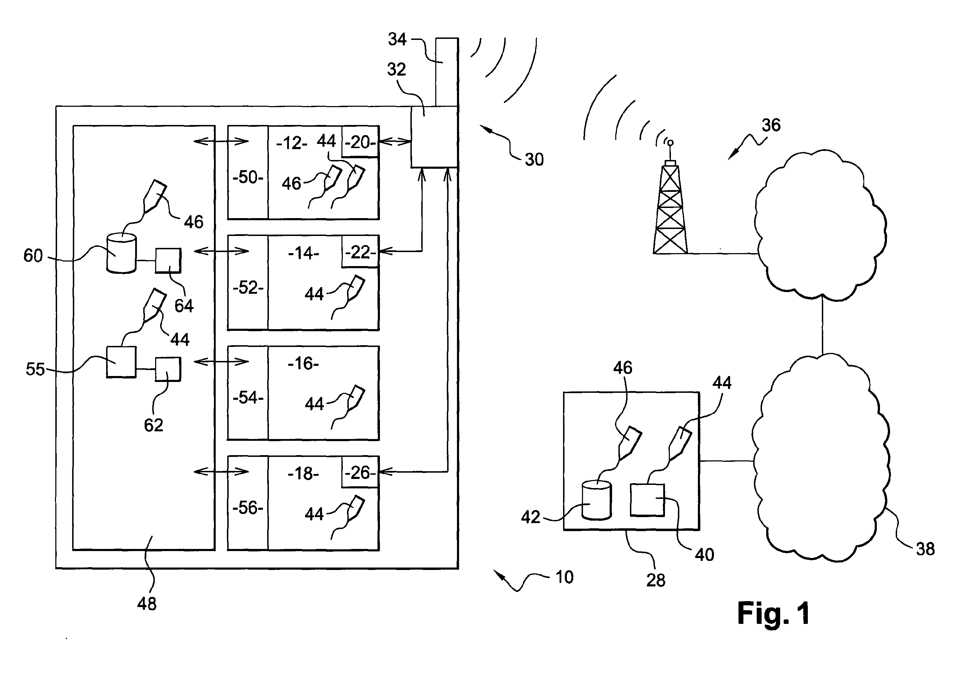

On a représenté sur la figure 1 un terminal mobile 10 dans lequel sont installés les programmes suivants :
- un navigateur Internet 12 ;
- un composeur 14 de messages de type MMS (Multimédia Message Service) ;
- un carnet d'adresses 16 ; et
- un module 18 de téléchargement du type connu OTA (de l'anglais "over-the-air").

L'ensemble forme un système informatique de chargement de données. En effet, les programmes 12, 14 et 18 comprennent chacun des moyens 20, 22 et 26 de téléchargement de fichiers de données stockés dans un serveur distant 28.

Afin de permettre le téléchargement, le terminal mobile 10 comporte des moyens de d'accès 30 liés aux moyens de téléchargement 20, 22, 26 lui permettant d'échanger des données avec le serveur distant 28. Les moyens d'accès comportent habituellement les moyens logiciels 32 et matériels 34 permettant d'accéder au serveur distant 28. Plus précisément, les moyens d'accès 30 permettent l'échange de données avec le serveur 28 par l'intermédiaire d'un réseau d'un opérateur 36, relié au réseau Internet 38 auquel le serveur 28 est raccordé.

Le serveur 28 stocke notamment un fichier image 40 et un autre fichier 42.

Un identifiant 44 "www.orange.fr-001" est attaché à l'image 40 représentant par exemple le logo de l'opérateur téléphonique Orange.

Un identifiant 46 "BZ6K4" est de même attaché au fichier 42.

Les identifiants 44 et 46 sont de plus implémentés dans les programmes 12 à 18.

Le terminal mobile 10 comporte en outre des moyens de stockage 48 des fichiers téléchargés par les programmes 12 à 18 depuis le serveur distant 28. Plus précisément, les programmes 12 à 18 comprennent des moyens d'accès 50 à 56 en lecture et en écriture aux moyens de stockage 48.

Ainsi, l'image téléchargée 58 et le fichier téléchargé 60 sont stockés dans les moyens 48.

Les moyens de stockage 48 peuvent donc être considérés comme un cache mutualisé entre les programmes 12 à 18.

Les identifiants 44 et 46 sont attachés respectivement à l'image téléchargée 58 et au fichier téléchargé 60.

Les moyens de stockage 48 comportent enfin des attributs 62 et 64, attachés respectivement à l'image téléchargée 58 et au fichier téléchargé 60, pouvant prendre une première valeur "X" indiquant que le fichier téléchargé 58, 60 ne doit pas être accessible en lecture pour les autres applications et une seconde valeur "O" indiquant que le fichier téléchargé 58, 60 est accessible en lecture pour les autres applications.

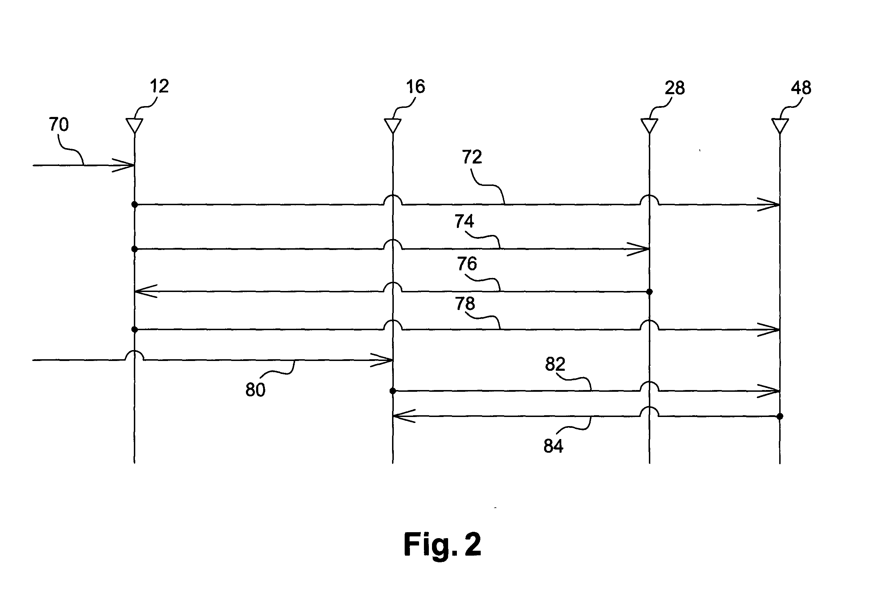

En se référant à la figure 2, on va à présent décrire un procédé de chargement de données mis en oeuvre par le système informatique.

Un utilisateur indique (étape 70) au navigateur Internet 12 une adresse "www.orange.fr" de type URL (Universal Ressource Location) qu'il souhaite atteindre.

Le navigateur Internet 12 recherche (étape 72) dans les moyens de stockage 48 une copie de cette page, par l'intermédiaire de ses moyens d'accès 20.

Les moyens de stockage 48 ne comprenant pas de copie de cette page, le navigateur Internet 12 se connecte (étape 74) au serveur distant 28 par l'intermédiaire des moyens d'accès 30 du terminal mobile 10 pour le téléchargement, suivant le protocole http 1.1, de la page stockée dans ce serveur distant 28.

Parmi les éléments associés à la page, se trouvent l'image 40 et le fichier 42, qui sont donc téléchargés en même temps que les autres éléments de la page.

Dans des données de l'entête associé au transfert de l'image 40, un champ comporte l'identifiant 44 propre à l'image 40. Plus précisément, le champ comporte la valeur "Cache-Id : www.orange.fr-001". La première partie de cette valeur, "Cache-Id", indique que le fichier peut être mutualisé entre plusieurs programmes. La seconde partie de la valeur, "www.orange.fr-001", correspond à l'identifiant 44 attaché à l'image 40, connu de l'ensemble des applications 12 à 18 susceptibles de charger des fichiers depuis les moyens de stockage 48.

Le navigateur Internet 12 reçoit l'image 40, qu'il peut utiliser, par exemple en l'affichant sur un écran du terminal mobile.

Il accède (étape 78) aux moyens de stockage 48, pour l'écriture de l'image téléchargée 58, et pour l'écriture de l'identifiant 44 et son rattachement à l'image téléchargée 58.

Pendant cette étape 78, il accède aussi aux moyens de stockage 48, pour l'écriture de l'attribut 54 et son rattachement à l'image téléchargée 58, la valeur "O" étant affectée à l'attribut, indiquant que l'image téléchargée 58 est accessible en lecture aux applications 12 à 18.

Dans des données de l'entête associé au transfert du fichier 42, un champ comporte l'identifiant 46 propre au fichier 42. Plus précisément, le champ comporte la valeur "BZ6K4".

Le navigateur Internet 12 reçoit le fichier 42, qu'il peut utiliser.

Toujours au cours de l'étape 78, il accède aux moyens de stockage 48, pour l'écriture du fichier téléchargé 60, et pour l'écriture de l'identifiant 46 et son rattachement au fichier téléchargé 60.

Il accède enfin aux moyens de stockage 48, pour l'écriture de l'attribut 64 et son rattachement au fichier téléchargé 60, la valeur "X" étant affectée à l'attribut, indiquant que le fichier téléchargé 60 ne doit pas être accessible en lecture pour les autres applications 14 à 18.

Dans ce cas, un autre attribut (non représenté), contenant un identifiant du programme 12 l'ayant écrit, peut être attaché au fichier téléchargé 60, afin de permettre à ce programme 12 de retrouver facilement le fichier téléchargé 60.

Par la suite, l'utilisateur lance (étape 80) le programme 16 (carnet d'adresses). Ce dernier utilise le logo d'orange, par exemple pour l'afficher à son démarrage.

Le programme 16 recherche (étape 82), par l'intermédiaire de ses moyens d'accès 54, dans les moyens de stockage 48 l'image téléchargée 58, à partir de l'identifiant 44.

La recherche aboutit positivement, et en conséquence, le carnet d'adresses 16 accède aux moyens de stockage 48, pour la lecture (étape 84) de l'image téléchargée 58, en vue de son utilisation.

On notera que l'invention ne se limite au mode de réalisation décrit.

En particulier, les applications 12 à 18 peuvent être associées chacune à un cache propre, stockant les fichiers non mutualisés.

En outre, les moyens de stockage 48 peuvent également comporter des données attachées aux fichiers téléchargés, ces données étant destinées à au moins une application 12 à 18. Par exemple, les données suivantes pourraient être attachées à l'image téléchargée 58, en vue de leur utilisation par le navigateur Internet 12 :
- l'URL de l'image 40 ;
- la date de mise en cache (enregistrement dans les moyens de stockage 48) ;
- la durée maximale pendant laquelle l'image téléchargée 58 peut être gardée en cache sans être mise à jour depuis le serveur 28.

De plus, les moyens de stockage peuvent assurer la gestion des fichiers téléchargés 58 et 60 qu'ils contiennent. Par exemple, les moyens de stockage peuvent supprimer l'image téléchargée 58, si elle est stockée pendant une durée supérieure à la durée maximale décrite précédemment.

Enfin, un ou plusieurs des programmes 12, 14, 18, peut ne pas comprendre de moyens de téléchargement, comme cela est le cas pour le carnet d'adresses 16.

## Revendications

1. Système informatique (10) de chargement de données du type comportant :
- des moyens d'accès (30) à un serveur distant (28) stockant des fichiers de données (40, 42) ;
- des moyens de stockage (48) au moins temporaire de fichiers ;
- un premier programme (12, 14, 16, 18) d'ordinateur comprenant :
- des moyens de téléchargement (20,22, 26) d'un fichier du serveur ; et
- des moyens d'accès (50, 52, 54, 56) aux moyens de stockage, pour l'écriture du fichier téléchargé (58, 60),
**caractérisé en ce qu'**il comporte un second programme (12, 14, 16, 18) d'ordinateur différent du premier comprenant des moyens d'accès (50, 52, 54, 56) aux moyens de stockage (48), pour la lecture du fichier téléchargé (58, 60) par le premier programme d'ordinateur (12, 14, 16, 18).

2. Système informatique (10) selon la revendication 1, dans lequel, le fichier du serveur (40, 42) étant associé à un identifiant (44, 46) qui lui est propre, le premier programme (12, 14, 16, 18) comporte des moyens d'accès (50, 52, 54, 56) aux moyens de stockage (48), pour l'écriture de cet identifiant (44, 46) et son rattachement au fichier téléchargé (58, 60), et le second programme (12, 14, 16, 18) comporte des moyens d'accès (50, 52, 54, 56) aux moyens de stockage (48), pour la recherche du fichier téléchargé (58, 60) à partir de son identifiant (44, 46).

3. Système informatique selon la revendication 1 ou 2, dans lequel le premier programme (12, 14, 16, 18) comporte des moyens d'accès (50, 52, 54, 56) aux moyens de stockage (48), pour l'écriture d'un attribut (62, 64) et son rattachement au fichier téléchargé (58, 60), l'attribut (62, 64) pouvant prendre une valeur indiquant que le fichier téléchargé (58, 60) ne doit pas être accessible en lecture pour la seconde application (12, 14, 16, 18).

4. Procédé de chargement de données comportant les étapes suivantes :
- accession (74) à un serveur distant (28) stockant des fichiers (40, 42) de données ;
- téléchargement (76) dans un système informatique (10) d'un fichier du serveur (40, 42) en vue de son utilisation par un premier programme (12, 14, 16, 18) d'ordinateur installé sur ce système (10) ;
- accession (78) par le premier programme (12, 14, 16, 18) à des moyens de stockage (48) au moins temporaire, pour l'écriture du fichier téléchargé (58, 60) ;
**caractérisé par** une étape d'accession (82) par un second programme (12, 14, 16, 18) d'ordinateur aux moyens de stockage (48), pour la lecture du fichier téléchargé (58, 60) en vue de son utilisation par le second programme (12, 14, 16, 18) d'ordinateur.

5. Procédé de chargement de données selon la revendication 4, comportant en outre les étapes suivantes, le fichier du serveur (40, 42) étant associé à un identifiant (44, 46) qui lui est propre :
- accession (78) aux moyens de stockage (48) pour l'écriture de cet identifiant (44, 46) et son rattachement au fichier téléchargé (58, 60) ; et
- accession (82) par le second programme (12, 14, 16, 18) aux moyens de stockage (48), pour la recherche du fichier téléchargé (58, 60) à partir du même identifiant (44, 46).

6. Procédé de chargement de données selon la revendication 4 ou 5, comportant en outre une étape d'accession (78) aux moyens de stockage (48), pour l'écriture d'un attribut (62, 64) et son rattachement au fichier téléchargé (58, 60), l'attribut (62, 64) pouvant prendre au moins une valeur indiquant que le fichier téléchargé (58, 60) ne doit pas être accessible en lecture pour le second programme (12, 14, 16, 18).
